# EUROPÄISCHE PATENTSCHRIFT

(11) **EP 1 358 922 B1**
(45) Veröffentlichungstag und Bekanntmachung des Hinweises auf die Patenterteilung: **15.09.2004**
(21) Anmeldenummer: 03009591.3
(22) Anmeldetag: 29.04.2003
(51) Int. Cl.: B01D 46/04

(54) **Düse für insbesondere eine Druckstossreinigung von ringförmigen Gasfiltern**
Nozzle, especially for cleaning cylindrical gas filter cartridge by pressure pulsing
Buse, en particulier pour le nettoyage, par coup de pression, de cartouche filtrante cylindrique à gaz

(30) Priorität: 02.05.2002 DE 10219693
(43) Veröffentlichungstag der Anmeldung: 05.11.2003
(73) Patentinhaber: MAHLE Filtersysteme GmbH, 70376 Stuttgart (DE)
(72) Erfinder: Quaas, Johannes, 74626 Bretzfeld (DE); Reinhardt, Alexander, 74626 Bretzfeld (DE); Wierling, Reinhard, 74629 Pfedelbach (DE)
(74) Vertreter: Patentanwalts-Partnerschaft, Rotermund + Pfusch + Bernard

(56) Entgegenhaltungen:
- EP-A- 0 338 314
- EP-A- 1 029 576

## Beschreibung

Die Erfindung betrifft eine Düse für insbesondere eine Druckstoßreinigung von ringförmigen Gasfiltern nach dem Oberbegriff des Patentanspruchs 1.

Derartige Düsen, wie aus EP-A-0 338 314 bekannt, die als Ein- oder Mehrlochdüsen ausgeführt sein können, werden beispielsweise zur Druckstoßreinigung von ringförmigen Luftfilterelementen im Stand der Technik eingesetzt. Bei den ringförmigen Luftfilterelementen handelt es sich meist um solche, die aus zick-zack-förmig gefaltetem Filterbahnmaterial bestehen und von außen nach innen von dem zu filternden Medium durchströmt werden. Werden solche Filter als Staubfilter eingesetzt, so können diese periodisch ohne ein Auswechseln des Filterelementes durch ein stoßweises Einführen von Druckluft in das Innere des Ringfilters gereinigt werden. Die Druckluftstöße werden durch die gattungsgemäße Düse in das Filterinnere geleitet.

Durch die Druckstöße werden starke Geräusche erzeugt

Bei einer gattungsgemäßen Düse beschäftigt sich die Erfindung mit dem Problem, die Druckstöße unter einer möglichst geringen Geräuschentwicklung durch die Düse zu führen. Darüber hinaus soll das unter Druckstößen durch die Düse geführte Gas, speziell Luft, in einer Weise aus der Düse austreten, durch die eine besonders gute Reinigungswirkung bei dem Filtermaterial erzielt wird.

Eine Lösung dieses Problems stellt eine Düse mit den kennzeichnenden Merkmalen des Patentanspruchs 1 dar.

Zweckmäßige und vorteilhafte Ausgestaltungen sind Gegenstand der Unteransprüche.

Die Erfindung beruht auf dem allgemeinen Gedanken, durch eine Profilierung bzw. Zerklüftung der Mantelfläche der mindestens einen Düsenöffnung eine Geräuschminderung zu erzielen und dabei zusätzlich einen Gasaustritt zu erzielen, der für die Reinigung der Innenfläche eines Ringfilterelementes besonders geeignet ist.

Eine besonders einfache Formgebung für die Profilierung der Mantelfläche der Düsenöffnung besteht darin, die Mantelfläche als ein Gewinde, insbesondere metrisches Gewinde nach DIN (Deutsche Industrienorm) auszubilden.

Ein Ausführungsbeispiel ist in der Zeichnung dargestellt.

In dieser zeigen
- Fig. 1: einen Längsschnitt durch eine Mehrloch-Düse,
- Fig. 2: eine Ansicht auf die Düse nach Pfeil II in Fig. 1,
- Fig. 3: einen Schnitt durch ein Ringfilter mit einer für eine Abreinigung von innen zugeordnete Düse nach Fig. 1.

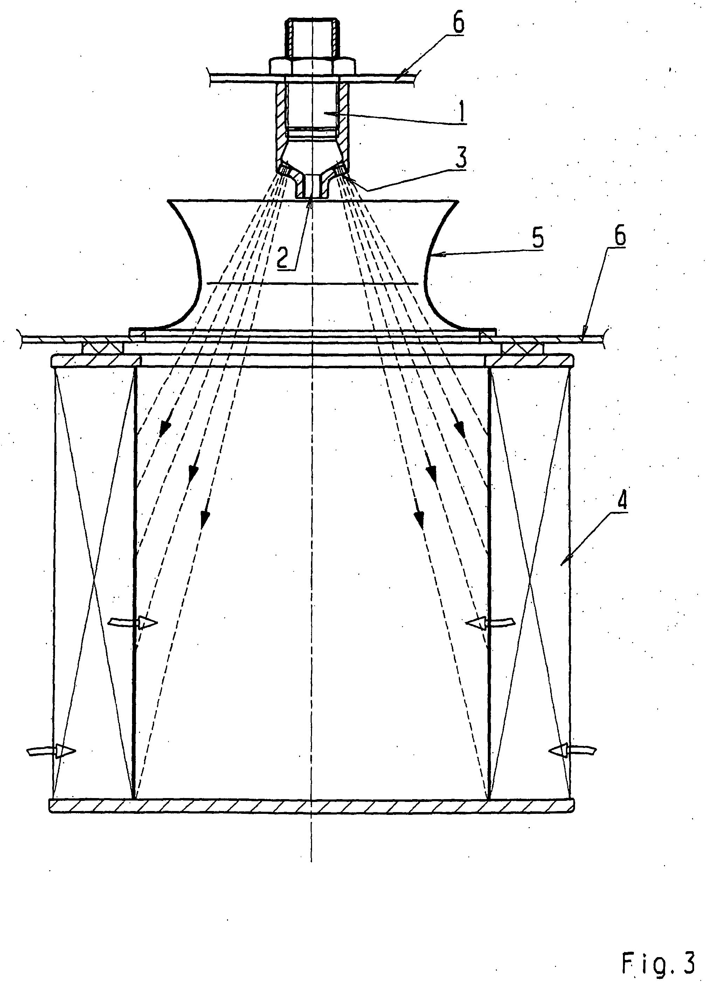

Eine Mehrloch-Düse 1 mit einer zentralen Öffnung 2 und diese Öffnung auf einem Kreisumfang umfassenden seitlichen, gegenüber der Achse der zentralen Öffnung 2 geneigt angeordneten Öffnungen 3 dient gemäß der Darstellung in Fig. 3 als Düse zum Einführen von Druckluftstößen in ein Ringfilter 4. Dieses Ringfilter 4 wird in einem Gehäuse 6, in dem es gelagert ist, von radial außen nach innen von einem zu filternden Medium durchströmt. Durch Luft-Druckstöße, die durch die Düse 1 in das Innere des Ringfilterelementes 4 eingeführt werden, kann eine Reinigung des Filtermaterials, das beispielsweise gefaltetes Filterbahnmaterial sein kann, auf einfache Weise erreicht werden.

Während eine Mehrlochdüse eine besonders gute Reinigung erzielen lässt, ist eine Reinigung auch mit einer einfachen Einlochdüse grundsätzlich möglich. Bei der Mehrloch-Düse 1 wird die stoßweise in das Ringfilterinnere geführte Druckluft über ein Venturirohr 5 in das Innere des Ringfilters 4 geleitet.

Zur Erzielung einer Dämpfung der bei dem stoßweisen Austreten von Druckluft aus der Düse 1 auftretenden relativ hohen Geräusche sind die Mantelflächen der zentralen und der seitlichen Öffnungen 2, 3 zerklüftet bzw. profiliert ausgeführt. Besonders einfach herstellbar und gut in der Wirkung sind Profilierungen in der Form von in die Öffnungen 2, 3 eingebrachten Gewinden. Dabei kann es sich insbesondere um metrische "M"-Gewinde nach DIN (Deutsche Industrienorm) handeln. Ebenso gut können umlaufende nebeneinander benachbart liegende Rillen in die Mantelfläche der Öffnungen 2 und 3 eingebracht sein. Auch diese andere Art einer Zerklüftung der betreffenden Mantelflächen bewirkt eine ähnliche Geräuschdämpfung.

Bei der Ausbildung der Mantelflächen der Öffnung 2, 3 in der Form von metrischen Gewinden lässt sich außer der Geräuschdämpfung zusätzlich auch noch eine besonders gute Reinigungswirkung erzielen.

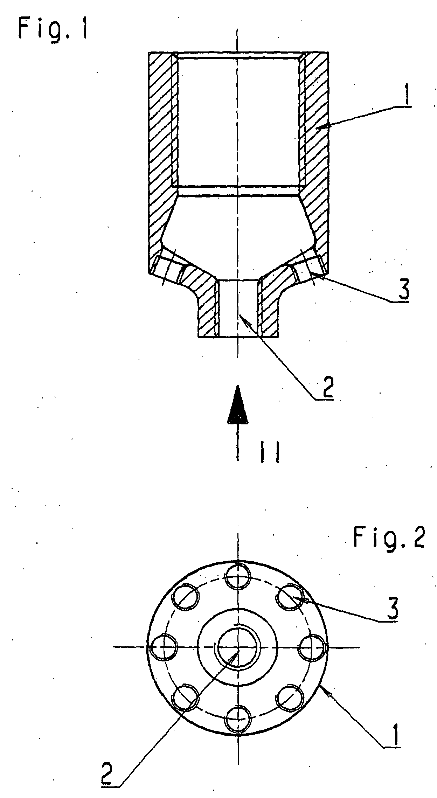

Die in den Fig. 1 und 2 dargestellte Düse kann beispielsweise konstruktiv wie folgt ausgeführt sein.

Bei einem Außendurchmesser von 45 mm besitzt die Düse 1 eine zentrale Öffnung mit einem M12-Gewinde als Mantelfläche. Die seitlichen Öffnungen 3 besitzen jeweils ein M7-Gewinde.

Der im Inneren der Düse 1 liegende Rand der Öffnungen 2 und 3 ist jeweils verrundet, wobei die zentrale Öffnung 2 einen Verrundungsradius von R = 3,5 mm und der Öffnungsrand der seitlichen Bohrungen jeweils einen Verrundungsradius von R = 2,5 mm aufweist. Die Länge der seitlichen Öffnungen 3 in Richtung von deren jeweiliger Achse beträgt etwa 10 mm. Die entsprechende Länge der zentralen Öffnung 2 mißt etwa 16 mm.

Die Düse 1 kann aus Aluminium, Kunststoff, Messing oder Stahl als Material bestehen.

## Patentansprüche

1. Düse für insbesondere eine Druckstoßreinigung von ringförmigen Gasfiltern mit mindestens einer zylindrischen Öffnung der Düse für unter Druckentspannung, insbesondere stoßartig austretende Gase, bei der die mindestens eine Öffnung in Achsrichtung eine Länge von mindestens 3 mm besitzt,
**dadurch gekennzeichnet,**
**dass** die Mantelfläche der mindestens einen Öffnung (2) profiliert bzw. zerklüftet ist mit einer radialen Tiefe von 5 bis 30% des Öffnungsdurchmessers und Lückenweiten in Achsrichtung zwischen den einzelnen Profilen bzw. radial innenliegenden Spitzenbereichen der zerklüfteten Mantelfläche von 5 bis 40% des Öffnungsdurchmessers.

2. Düse nach Anspruch 1,
**dadurch gekennzeichnet,**
**dass** der innerhalb der Düse (1) liegende Öffnungsrand der mindestens einen Öffnung (2) mit einem Radius zwischen 10 und 40% des Durchmessers der jeweiligen Öffnung (2, 3) abgerundet ist.

3. Düse nach Anspruch 1 oder 2,
**dadurch gekennzeichnet,**
**dass** die axiale Länge der mindestens einen Öffnung (2) 30% bis 200% des Durchmessers der jeweiligen Öffnung (2, 3) misst.

4. Düse nach einem der vorhergehenden Ansprüche,
**dadurch gekennzeichnet,**
**dass** die Profilierung der Mantelfläche ein Gewinde ist.

5. Düse nach Anspruch 4,
**dadurch gekennzeichnet,**
**dass** das Gewinde als ein metrisches "M"-Gewinde nach DIN (Deutsche Industrienorm) ausgebildet ist.

## Claims

1. A nozzle for pressure surge cleaning of ring-shaped gas filters in particular having at least one cylindrical opening of the nozzle for gases emitted with a sudden release of pressure, in particular in a surge, whereby the at least one opening has a length of at least 3 mm in the axial direction,
**characterized in that**
the lateral surface of the at least one opening (2) is profiled, i.e., fissured with a radial depth of 5% to 30% of the diameter of the opening and gap widths in the axial direction between the individual profiles and/or peak areas of the fissured lateral surfaces on the inside radially amounting to 5% to 40% of the diameter of the opening.

2. The nozzle according to Claim 1,
**characterized in that**
the edge of the opening situated inside the nozzle (1) of the at least one opening (2) is rounded with a radius between 10% and 40% of the diameter of the particular opening (2, 3).

3. The nozzle according to Claim 1 or 2,
**characterized in that**
the axial length of at least one opening (2) amounts to 30% to 200% of the diameter of the respective opening (2, 3).

4. The nozzle according to one of the preceding claims,
**characterized in that**
the profiling of the lateral surface is formed by a thread.

5. The nozzle according to Claim 4,
**characterized in that**
the thread is designed as a metric "M" thread according to DIN (German Industrial Standard).

## Revendications

1. Buse, en particulier pour un nettoyage par à-coups de pression de filtres à gaz annulaires, comprenant au moins une ouverture cylindrique de la buse pour des gaz s'échappant sous détente de pression, en particulier par à-coups, dans laquelle la au moins une ouverture présente dans la direction axiale une longueur d'au moins 3 mm,
**caractérisée en ce**
**que** la surface d'enveloppe de la au moins une ouverture (2) est profilée ou fissurée avec une profondeur radiale de 5 à 30% du diamètre d'ouverture et des intervalles dans la direction axiale entré les profils individuels ou les zones de pointes radiales internes de la surface d'enveloppe fissurée de 5 à 40% du diamètre d'ouverture.

2. Buse suivant la revendication 1,
**caractérisée en ce**
**que** le bord de la au moins une ouverture (2) situé à l'intérieur de la buse (1) est arrondi avec un rayon compris entre 10 et 40% du diamètre de l'ouverture considérée (2, 3).

3. Buse suivant l'une des revendications 1 et 2,
**caractérisée en ce**
**que** la longueur axiale de la au moins une ouverture (2) mesure 30% à 200% du diamètre de l'ouverture considérée (2, 3).

4. Buse suivant l'une des revendications précédentes,
**caractérisée en ce**
**que** le profilage de la surface d'enveloppe est un filetage.

5. Buse suivant la revendication 4,
**caractérisée en ce**
**que** le filetage est réalisé sous forme de filetage métrique "M" suivant DIN (Norme Industrielle Allemande).
